# EUROPÄISCHE PATENTANMELDUNG

(11) **EP 1 674 199 A1**
(43) Veröffentlichungstag der Anmeldung: **28.06.2006**
(21) Anmeldenummer: 05027430.7
(22) Anmeldetag: 15.12.2005
(51) Int. Cl.: B23Q 11/08

(54) **Spanablenkvorrichtung für eine Spindeleinheit an einer spanabhebenden Bearbeitungsmaschine**

(30) Priorität: 23.12.2004 IT MI20042501
(71) Anmelder: Busellato S.p.A., 36013 Piovene Roccette VI (IT)
(72) Erfinder: Delachi, Ambrogio, 37121 Verona (IT)
(74) Vertreter: Carloni, Franco

(57) **Zusammenfassung**

Die Spanablenkvorrichtung für eine Spindeleinheit einer spanabhebenden Bearbeitungsmaschine besteht aus zumindest einer Umfangwand, um zumindest einen Teil eines Außenbereichs um ein in die Spindeleinheit eingesetztes Schneidwerkzeug zu umschließen, und die vom Schneid-werkzeug bei der Bearbeitung eines Werkstücks erzeugten Späne abzulenken. Die Vorrichtung besteht aus einem Gleitelement, mit dem die Umfangwand fest verbunden ist, einer mit der Spindeleinheit gekoppelte Gleitschiene zum Führen der Gleitbewegung des Gleitelements entlang einer zu einer Achse der Spindeleinheit parallelen Richtung und einem mit der Spindeleinheit verbundenen Antrieb, um die Gleitbewegung des Gleitelements entlang der Gleitschiene zu bewirken.

## Beschreibung

Die vorliegende Erfindung bezieht sich auf eine Spanablenk-vorrichtung für eine Spindeleinheit an einer spanabhebenden Bearbeitungsmaschine, beispielsweise an einem Arbeitszentrum oder einer Maschine für laufende Fertigung.

Bei den spanabhebenden Bearbeitungsmaschinen der vorerwähn-ten Art ist die Anwendung einer Vorrichtung zum Ablenken der Späne, die von einem Schneidwerkzeug bei der Bearbeitung eines Werkstücks aus-geworfen werden, bekannt. Die Spanablenkvorrichtung besteht im allgemeinen aus einer Umfangwand, die zumindest einen Teil des umliegenden Bereiches des Schneidwerkzeuges umgibt. Die bei der Bearbeitung eines Werkstücks erzeugten Späne prallen auf die Umfangwand und verlieren folglich an kinetischer Energie. Die Verminderung der kinetischen Energie der Späne ist derart, dass sie durch ein eigenes Absauggerät, auch mit verhältnismäßig geringer Absaugkraft, wirksam angesaugt werden können.

In DE-29907571 U1 wird eine Spanablenkvorrichtung beschrieben, bei der die Umfangwand an einer auf ein Schneidwerkzeug feststehend aufgebrachten Auflage befestigt ist, dessen Späne man ablenken will, und die um die Drehachse der Spindeleinheit über eine Einstellgruppe derart schwenkbar ist, dass sie in einer gewollten Stellung um das Schneidwerkzeug angeordnet werden kann. Ein Nachteil einer derartigen baulichen Lösung ist dadurch gegeben, dass das Schneidwerkzeug größer ist als ein herkömmliches Schneidwerkzeug ohne Spanablenk-vorrichtung, weshalb zum Lagern der Schneidwerkzeuge ein größeres Werkzeugmagazin mit gleichem Speicherungsvermögen vorgesehen werden muß. Ferner sind die Kosten für ein Schneidwerkzeug mit einer Spanablenkvorrichtung, gemäß der vorgenannten baulichen Lösung ausgestattet, verhältnismäßig hoch aufgrund der Drehauflage für die Umfangwand.

In DE 103 20 082 A1 wird eine Spanablenkvorrichtung beschrieben, bei der die Umfangwand auf eine Auflage aufgebracht ist, die auf eine Spindeleinheit aufsteckbar ist, anstatt auf das Schneidwerkzeug aufgebracht zu werden. Auch in diesem Fall kann die Umfangwand um die Drehachse der Spindeleinheit über eine Schwenkgruppe derart geschwenkt werden, dass sie in einer gewollten Stellung um das Schneidwerkzeug angeordnet werden kann. Ein Nachteil der baulichen Lösung dieser Art besteht darin, dass, wenn eine bestimmte Bearbeitung eines Werkstücks die Verwendung eines Schneidwerkzeuges nicht erfordert, sondern ein anderes Werkzeug, beispielsweise ein Bohrwerkzeug, die Spanablenkvorrichtung nicht nur nutzlos wird, sondern könnte auch in den Werkzeugarbeitsbereich eingreifen, weshalb zur Bearbeitung die Spanablenkvorrichtung von der Spindeleinheit auszukuppeln ist. Diese Arbeit, die tatsächlich mit dem Austausch eines Werkzeugs gleichwertig ist, erhöht die Einrichtungszeit der Spindeleinheit. Ferner ist nach der oben erwähnten baulichen Lösung eine eigene Auflage von einer besonderen zum Ankuppeln der Spanablenkvorrichtung geeigneten Konstruktion, wenn sie nicht verwendet wird, vorzusehen.

Der vorliegenden Erfindung liegt die Aufgabe zugrunde, den vorge-nannten Mängeln abzuhelfen, die die Spanablenkvorrichtungen gemäß den vorerwähnten bekannten baulichen Lösungen aufweisen.

Diese Aufgabe wird erfindungsgemäß gelöst durch eine Spanablenkvorrichtung für eine Spindeleinheit einer spanabhebenden Bearbeitungsmaschine bestehend aus einer Umfangwand, um zumindest einen Teil eines umliegenden Bereiches um ein in die Spindeleinheit eingesetztes Schneidwerkzeug zu umschließen, und die von dem Schneidwerkzeug bei der Bearbeitung eines Werkstücks erzeugten Späne abzulenken, dadurch gekennzeichnet, dass sie ein Gleitelement, mit dem die Umfangwand fest verbunden ist, eine mit der Spindeleinheit gekoppelte Gleitschiene zum Führen der Gleitbewegung des Gleitelements entlang einer zur Achse der Spindeleinheit parallelen Richtung und einen mit der Spindeleinheit verbundenen Antrieb, um die Gleitbewegung des Gleitelements entlang der Gleitschiene zu bewirken, aufweist.

Der dieser Erfindung zugrundeliegende Lösungsgedanke besteht darin, dass die Spanablenkvorrichtung zum ständigen Einbau in die Spindeleinheit bestimmt ist, und die Umfangwand der Spanablenkvor-richtung aus einer Nichtbetriebsstellung, in der sie sich außerhalb dem Arbeitsbereich des in die Spindeleinheit eingesetzten Werkzeuges befindet, in eine Betriebsstellung verschoben werden kann, in der sie sich innerhalb dem Arbeitsbereich von diesem Werkzeug befindet und es zumindest teilweise umgibt.

Mit der erfindungsgemäßen Lösung hat man den Vorteil, dass es nicht nötig ist, die Spanablenkvorrichtung von der Spindeleinheit an- und auszukuppeln, wenn deren Einsatz bei einer bestimmten Bearbeitung gefordert bzw. nicht gefordert ist. Es folgt daraus, dass die Einrichtungs-zeit für die Spindeleinheit unverändert bleibt, weil die Verschiebung der Umfangwand der Spanablenkvorrichtung aus der Nichtbetriebsstellung in die Betriebsstellung, und umgekehrt, in verborgener Zeit erfolgen kann und also ohne Erhöhen der Einrichtungszeit für die Spindeleinheit.

Des weiteren beseitigt die erfindungsgemäße Spanablenkvor-richtung den Nachteil, einerseits auf jedes Schneidwerkzeug eine Umfangwand aufbringen zu müssen, die zumindest teilweise das Werkzeug umgibt, und andererseits Spezialschneidwerkzeuge größeren Ausmaßes als die herkömmlichen verwenden zu müssen, die größere Werkzeugmagazine bei gleicher Kapazität erfordern.

Die vorliegende Erfindung wird nun anhand von zwei bevorzugten Ausführungsformen beschrieben, die nur beispielsweise in den anliegenden Zeichnungen veranschaulicht werden und nicht darauf beschränkt sind. Es zeigen:
Figur 1 eine Ansicht im Vorderaufriß einer ersten Ausführungsform der auf eine Spindeleinheit montierten erfindungsgemäßen Spanablenk-vorrichtung;
Figur 2 - 5 eine Ansicht im Vorderaufriß der Spanablenkvorrichtung von Fig. 1 in verschiedenen Arbeitsstellungen;
Figur 6 eine Ansicht im Vorderaufriß einer zweiten Ausführungsform der auf eine Spindeleinheit aufgebrachten erfindungsgemäßen Span-ablenkvorrichtung; und
Figur 7 eine Draufsicht der Spanablenkvorrichtung von Fig. 6.
Figur 8 eine Ansicht gemäß Fig. 1, mit der Umfangwand der Spanablenkvorrichtung, die um 180° gedreht ist,
Figur 9 eine von hinten gesehene perspektivische Ansicht der Spanablenkvorrichtung von Fig. 1.

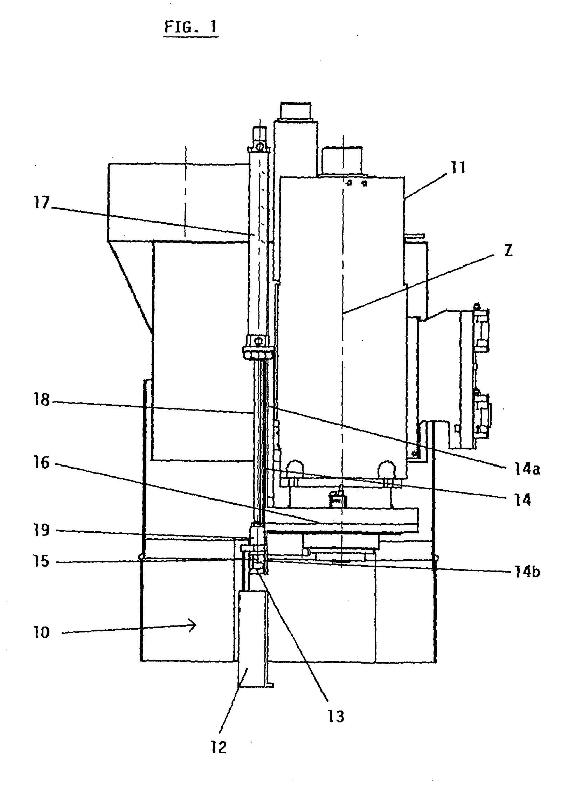

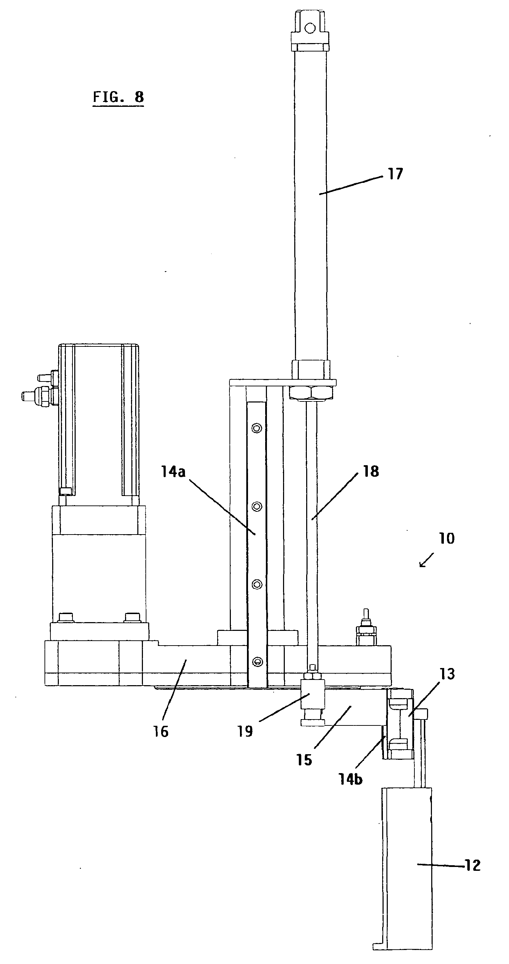

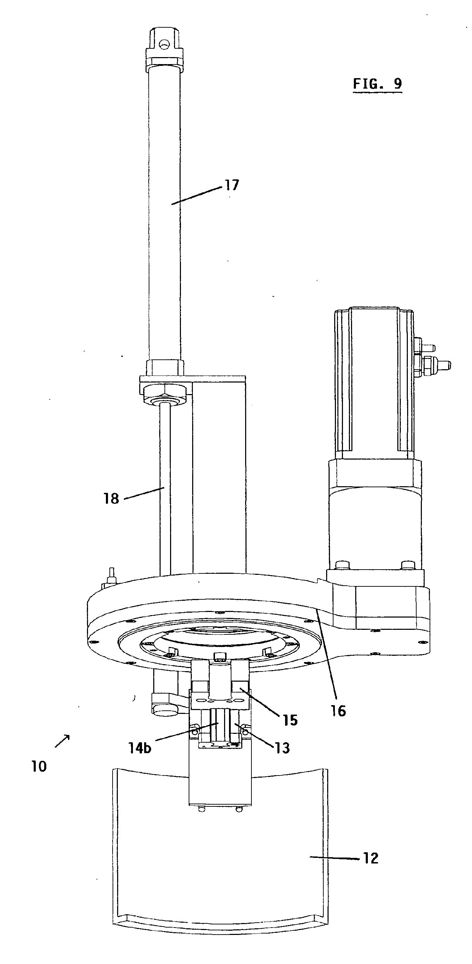

Mit Bezug auf die Figuren 1, 8 und 9 der Zeichnungen wird darin eine erste Ausführungsform der erfindungsgemäßen Spanablenk-vorrichtung, im gesamten mit 10 bezeichnet, dargestellt. Die Spanablenk-vorrichtung ist zur dauernden Installation in eine Spindeleinheit 11 einer spanabhebenden Bearbeitungsmaschine bestimmt. Die Spanablenk-vorrichtung 10 besteht in an sich bekannter Weise aus einer Umfangwand 12, um zumindest einen Teil des umliegenden Bereiches von einem in die Spindeleinheit 11 eingesetzten Schneidwerkzeug (nicht dargestellt) zu umschließen. Die Umfangwand 12 ist mit einem Gleitelement 13, oder im allgemeinen mit einem beliebigen vergleichbaren mechanischen Glied, das auf einer mit der Spindeleinheit 11 verbundenen Gleitschiene 14 gleiten kann, in fester Verbindung. Die Gleitschiene 14 besteht aus einem ersten Gleitschienenabschnitt 14a, der mit der Spindeleinheit 11 direkt verbunden ist und einem zweiten Gleitbahnabschnitt 14b, der mit der Spindeleinheit 11 über eine um die Achse Z der Spindeleinheit 11 schwenkbare Halterung 15 indirekt verbunden ist. Zur Schwenkbewegung der Halterung 15 ist vorzugsweise die Verwendung einer eigenen Schwenkgruppe 16 für die Spanablenkvorrichtung 10 vorgesehen, von einer an sich bekannten Bauart und auf die Spindeleinheit 11 aufgebracht. Ein mit der Spindeleinheit 11 gekoppelter Antrieb 17 ist für die Verschiebung des Gleitelements 13 vom ersten Gleitschienenabschnitt 14a zum zweiten Gleitschienenabschnitt 14b, und umgekehrt, vorgesehen. Der Antrieb 17 besteht aus einer Stange 18 mit einem Kupplungsglied 19 zum Ankuppeln des Gleitelements 13 der Spanablenkvorrichtung. Das Kupplungsglied 19 kann beispielsweise aus einem Stift gebildet sein, und das Gleitelement 13 kann einen Aufnahmesitz mit einem elastisch verformbaren Teil zur Aufnahme des Stiftes und zu seiner Schnappbefestigung daran aufweisen. Das Ankuppeln bzw. das Auskuppeln des Kupplungsgliedes 19 mit dem Gleitelement 13 wird von der Schwenkvorrichtung 16 durch eine Schwenkung der Halterung 15 in eine erste Richtung beziehungsweise in eine zweite zur ersten entgegengesetzten Richtung ausgeführt, wie aus der folgenden Beschreibung klarer verständlich wird.

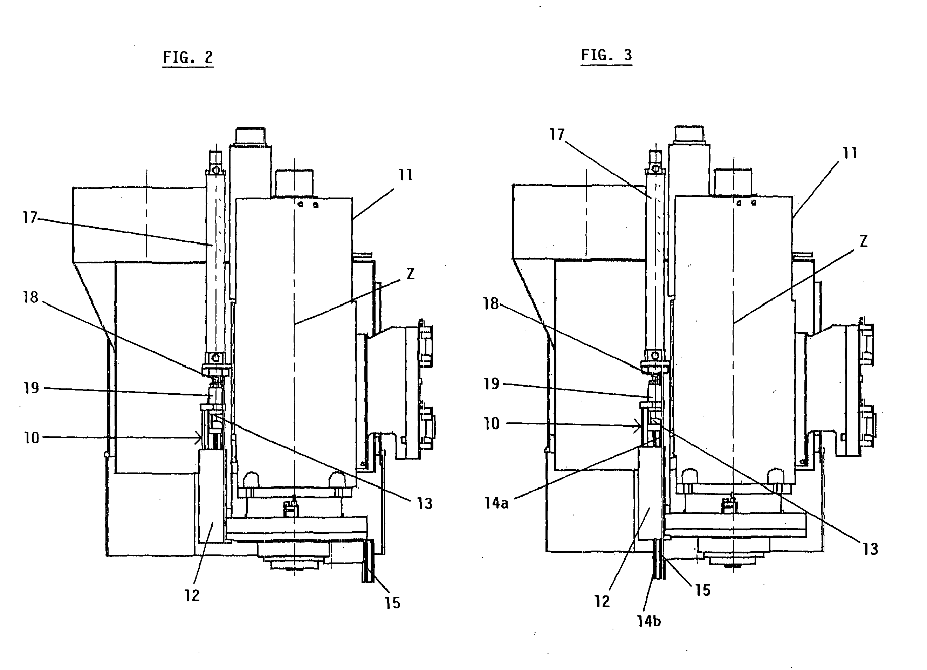

Die Arbeitsgänge zum Schwenken der Umfangwand 12 der Spanablenkvorrichtung 10 in die Betriebsstellung um ein in die Spindeleinheit 11 eingesetztes Werkzeug, beziehungsweise in die Nicht-betriebsstellung, werden im folgenden mit Bezug auf Figur 2 bis 5 beschrieben.

Die Figur 2 zeigt den Arbeitsgang, in dem das Kupplungsglied 19 auf der Stange 18 des Antriebs 17 mit dem Gleitelement 13 der Spanablenkvorrichtung 10 angekuppelt ist, und die Stange 18 des Antriebs 17 befindet sich in einer eingezogenen Stellung, in der die Umfangwand 12 der Spanablenkvorrichtung 10 sich in angehobener Stellung befindet und den Arbeitsbereich eines in die Spindeleinheit 11 eingesetzten Werkzeugs nicht stört.

Figur 3 zeigt den Arbeitsgang, in dem das Kupplungsglied 19 auf der Stange 18 des Antriebs 17 noch am Gleitelement 13 der Spanablenkvorrichtung 10 angekuppelt ist, und die Halterung 15 um die Achse Z der Spindeleinheit 11 geschwenkt ist, um den zweiten Gleit-schienenabschnitt 14b in eine Fluchtstellung mit dem ersten Gleitschienenabschnitt 14a zu überführen. In dieser Fluchtstellung des ersten und des zweiten Gleitschienenabschnitts 14a bzw. 14b kann das Gleitelement 13 der Spanablenkvorrichtung 10 vom ersten Gleit-schienenabschnitt 14a zum zweiten Gleitschienenabschnitt 14b, oder umgekehrt, mittels der Stange 18 des Antriebs 17 versetzt werden, um die Umfangwand 12 zu senken bzw. anzuheben.

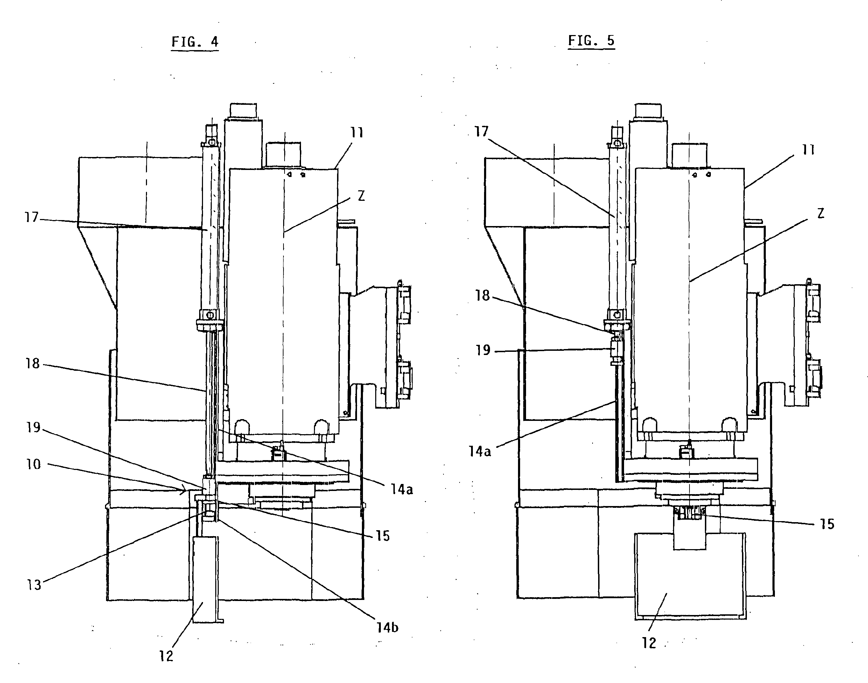

Figur 4 zeigt den Arbeitsgang, in dem das Gleitelement 13 der Spanablenkvorrichtung 10 am Kupplungsglied 19 auf der Stange 18 des Antriebs 17 noch angekuppelt ist, aber die Stange 18 befindet sich in einer ausgezogenen Stellung, weshalb das Gleitelement 13 vom ersten Gleitschienenabschnitt 14a zum zweiten Gleitschienenabschnitt 14b überführt wird, und die Umfangwand 12 sich in einer gesenkten Stellung befindet.

Schließlich zeigt Figur 5 den Arbeitsgang, in dem die Halterung 15 um die Achse Z der Spindeleinheit 11 geschwenkt wird, um das Auskuppeln des Gleitelements 13 vom Kupplungsglied 19 auf der Stange 18 des Antriebs 17 zu ermöglichen. Die Stange 18 von Antrieb 17 wird erneut in eine eingezogene Stellung überführt, so daß das Kupplungsglied 19 die Schwenkung der Halterung 15 um die Achse Z der Spindeleinheit 11 nicht stört. Die Umfangwand 12, da sie mit der Halterung 15 verbunden ist, ist um einen umliegenden Bereich des Schneidwerkzeugs um 360° schwenkbar mittels einer Drehung der Halterung 15 um die Achse Z der Spindeleinheit 11, durch die Wirkung der Schwenkgruppe 16 der Spanablenkvorrichtung.

Die Arbeitsgänge zum Ankuppeln des Gleitelements 13 an das Kupplungsglied 19 und zum Einstellen der Umfangwand 12 der Spanablenkvorrichtung 10 in eine angehobene Nichtbetriebsstellung erfolgen natürlich in umgekehrter Folge zu der oben beschriebenen.

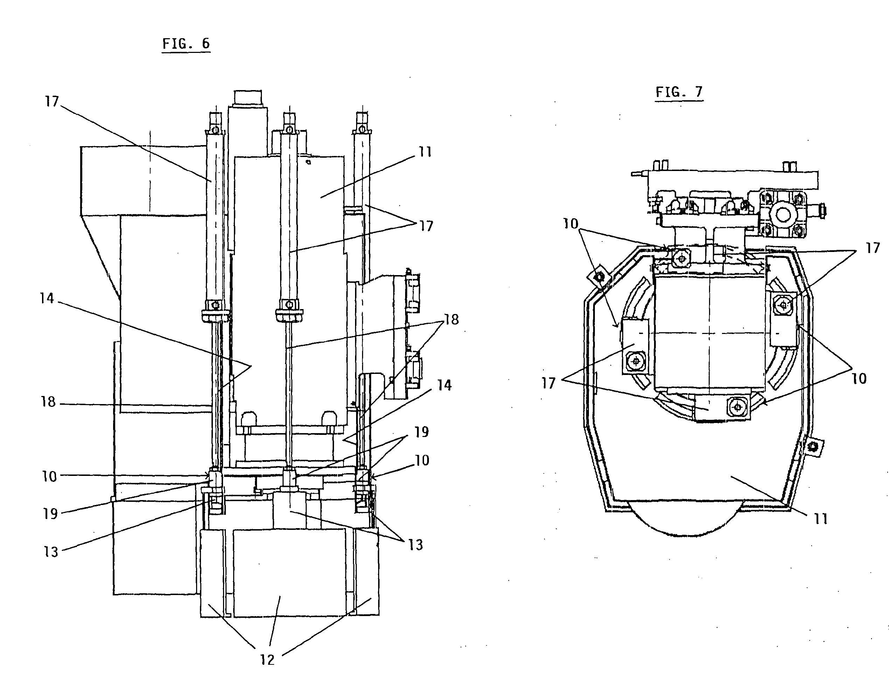

Mit Bezug auf Figur 6 und 7 der Zeichnungen, wird dort eine zweite Ausführungsform der erfindungsgemäßen Spanablenkvorrichtung 10 dar-gestellt. Der Einfachheit halber werden die Teile, die nach Bauart und/oder Funktion jenen der ersten Ausführungsform entsprechen, mit denselben Bezugszeichen bezeichnet.

Die zweite Ausführungsform der Spanablenkvorrichtung 10 kann bei einer Spindeleinheit 11 ohne der Schwenkgruppe 16 zum Schwenken der Umfangwand 12 um die Achse Z der Spindeleinheit verwendet werden. Bei dieser zweiten Ausführungsform sind vorzugsweise zwei oder mehrere Umfangwände 12 vorgesehen, von denen eine jede zumindest zwei oder mehrere Abschnitte eines umliegenden Bereiches eines in die Spindeleinheit 11 einzusetzenden Schneidwerkzeuges (nicht dargestellt) umschließt. Natürlich ist eine Lösung mit einer einzigen Umfangwand nicht ausgeschlossen, obgleich sie eine Einschränkung für die Funktions-tüchtigkeit der Spanablenkvorrichtung darstellt. Die allgemeine Bauart der Spanablenkvorrichtung 10 unterscheidet sich von jener der ersten Ausführungsform dadurch, daß, insofern als keine Schwenkgruppe 16 für die Spanablenkvorrichtung vorhanden ist, die Umfangwände 12 jeweils an ein eigenes Gleitelement 13 gekuppelt sind, das auf einer Gleitschiene 14 gleitet, die aus einem einzigen mit der Spindeleinheit direkt verbundenen Gleitschienenabschnitt gebildet ist, und jeder der Umfangwände wird unabhängig und nach Wahl gesenkt und angehoben mittels eines Antriebs 17, in Abhängigkeit des Abschnitts der Umfangwand um das Schneidwerkzeug, der zum Ablenken der beim Bearbeiten erzeugten Späne zu umschließen ist.

In Figur 6 und 7 wird der Fall gezeigt, bei dem vier Spanablenkvorrichtungen 10 vorhanden sind, und die Umfangwände 12 einer jeden umgeben im wesentlichen ein Viertel des Umfangs des umliegenden Bereiches des Schneidwerkzeuges. Es können natürlich mehr oder weniger als vier Spanablenkvorrichtungen 10 sein und deren Anzahl wird von Mal zu Mal aufgrund technisch-wirtschaftlicher Kriterien der Zweckmäßigkeit gewählt, die einerseits der Wirksamkeit der Ablenkung der Späne und andererseits den Kosten und dem Ausmaß der Spanablenkvorrichtungen Rechnung tragen.

Wenngleich die Erfindung anhand von zwei bevorzugten Ausführungsformen beschrieben wurde, versteht es sich, daß ein Fach-mann Varianten oder Änderungen daran vornehmen kann, ohne dabei aus dem Rahmen der anliegenden Patentansprüche auszutreten.

## Patentansprüche

1. Spanablenkvorrichtung (10) für eine Spindeleinheit (11) einer spanabhebenden Bearbeitungsmaschine bestehend aus einer Umfangwand (12), um zumindest einen Teil eines umlegenden Bereiches um ein in die Spindeleinheit (11) eingesetztes Schneidwerkzeug zu umschließen, und die vom Schneidwerkzeug bei der Bearbeitung eines Werkstücks erzeugten Späne abzulenken, **dadurch gekennzeichnet, dass** sie ein Gleitelement (13) aufweist, mit dem die Umfangwand (12) fest verbunden ist, eine mit der Spindeleinheit (11) gekoppelte Gleitschiene (14) zum Führen der Gleitbewegung des Gleitelements (13) entlang einer zur Achse (Z) der Spindeleinheit (11) parallelen Richtung und einem mit der Spindeleinheit (11) verbundenen Antrieb (17), um die Gleitbewegung des Gleitelements (13) entlang der Gleitschiene (14) zu bewirken.

2. Spanablenkvorrichtung nach Anspruch 1, **dadurch gekennzeichnet, dass** die Gleitschiene (14) aus einem ersten mit der Spindeleinheit (11) direkt verbundenen Gleitschienenabschnitt (14a) und einem zweiten mit der Spindeleinheit (11) indirekt verbundenen Gleitschienenabschnitt (14b) über eine um die Achse (Z) der Spindeleinheit (11) schwenkbare Halterung (15) besteht, wobei der zweite Gleitbahnabschnitt (14b) mit dem ersten Gleitschienenabschnitt (14a) mittels einer Verschwenkung der Halterung (15) um die Achse (Z) der Spindeleinheit fluchtgerecht sein kann, um die Versetzung des Gleitelements (13) vom ersten Gleitschienenabschnitt (14a) zum zweiten Gleitschienenabschnitt (14b) und umgekehrt zu ermöglichen.

3. Spanablenkvorrichtung nach Anspruch 2, **dadurch gekennzeichnet, dass** die Halterung (15) der Umfangwand (12) um einen umliegenden Bereich eines in die Spindeleinheit (11) eingesetzten Schneidwerkzeuges, mittels einer Drehung um die Achse (Z) der Spindeleinheit, schwenkt.

4. Spanablenkvorrichtung nach Anspruch 3, **dadurch gekennzeichnet, dass** die Halterung (15) mit der Spindeleinheit (11) mittels einer Schwenk-gruppe (16) drehbar verbunden ist.

5. Spanablenkvorrichtung nach Anspruch 1, **dadurch gekennzeichnet, dass** die Gleitschiene (14) aus einem einzigen mit der Spindeleinheit direkt verbundenen Gleitschienenabschnitt gebildet ist.

6. Spanablenkvorrichtung nach Anspruch 1, **dadurch gekennzeichnet, dass** der Antrieb (17) aus einem beweglichen Glied (18) mit Kupplungs-mitteln (19) für das Gleitelement (13) zum Ankuppeln beziehungsweise Auskuppeln des Gleitelement (13), besteht.

7. Spanablenkvorrichtung nach Anspruch 6, **dadurch gekennzeichnet, dass** der Antrieb (17) aus einem mit dem Gleitelement (13) fest verbundenen beweglichen Glied (18) besteht.

8. Spanablenkvorrichtung nach Anspruch 6, **dadurch gekennzeichnet, dass** der Antrieb (17) von linearem Typ ist und das bewegliche Glied (18) von Antrieb (17) aus einer Stange gebildet ist, die in eine zur Achse (Z) der Spindeleinheit (11) parallele Richtung beweglich ist.

9. Spanablenkvorrichtung nach Anspruch 7, **dadurch gekennzeichnet, dass** der Antrieb (17) von linearem Typ ist und das bewegliche Glied (18) von Antrieb (17) aus einer Stange gebildet ist, die in eine zur Achse (Z) der Spindeleinheit (11) parallele Richtung beweglich ist.

10. Spanablenkvorrichtung nach Anspruch 6, **dadurch gekennzeichnet, dass** die Kupplungsmittel (19) für das Gleitelement (13) aus einem Stift gebildet sind, und das Gleitelement (13) schließt einen Aufnahmesitz für den Stift ein, wobei der Aufnahmesitz mit elastisch verformbaren Mitteln ausgestattet ist, um den Stift darin zu blockieren.

11. Spanablenkvorrichtung nach Anspruch 6, **dadurch gekennzeichnet, dass** die Halterung 15 das Ankuppeln bzw. Auskuppeln der Kupplungs-mittel (19) mit dem Gleitelement (13) mittels einer Schwenkung um die Achse (Z) der Spindeleinheit (11) in eine Richtung beziehungsweise in die entgegen-gesetzte Richtung bewirkt.

12. Spindeleinheit (11) einer spanabhebenden Bearbeitungsmaschine, **dadurch gekennzeichnet, dass** sie mehrere Spanablenkvorrichtungen (10) gemäss Anspruch 1 aufweist, die symmetrisch um die Achse (Z) der Spindeleinheit (11) angeordnet sind.
